(19) Europäisches Patentamt
European Patent Office
Office européen des brevets

(11) Veröffentlichungsnummer: **0 197 325**
**B1**

# (12) EUROPÄISCHE PATENTSCHRIFT

(45) Veröffentlichungstag der Patentschrift: **03.01.90**

(51) Int. Cl.⁴: **C08F 8/32**

(21) Anmeldenummer: **86103118.5**

(22) Anmeldetag: **08.03.86**

(54) **Wasserlösliche, quartäre Ammonium- oder Pyridiniumgruppen und Alkoxysilylgruppen tragende Polymerisate, Verfahren zu ihrer Herstellung sowie ihre Verwendung.**

(30) Priorität: **06.04.85 DE 3512560**

(43) Veröffentlichungstag der Anmeldung: **15.10.86 Patentblatt 86/42**

(45) Bekanntmachung des Hinweises auf die Patenterteilung: **03.01.90 Patentblatt 90/1**

(84) Benannte Vertragsstaaten: **BE DE FR GB IT NL**

(56) Entgegenhaltungen:
**EP-A- 0 101 541**
**FR-A- 1 523 820**
**FR-A- 2 171 326**

(73) Patentinhaber: **HÜLS AKTIENGESELLSCHAFT, Paul-Baumann-Strasse 1, D-4370 Marl 1(DE)**

(72) Erfinder: **Bernhardt, Günther, Dr., Rheinstrasse 33, D-5205 St. Augustin 2(DE)**
Erfinder: **Hanisch, Horst, Dr., Fröbelweg 19, D-5202 Hennef(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 197 325 B1

## Beschreibung

Gegenstand der vorliegenden Erfindung sind neue, wasserlösliche, quartäre Ammonium- oder Pyridiniumgruppen sowie Alkoxysilylgruppen tragende Polymerisate, die als Haftmittel wirksam sind.

Aus der DE-OS 32 27 552 sind bereits nichtionische wasserlösliche oder in Wasser emulgierbare, als Haftvermittler wirkende Copolymerisate bekannt, die durch Umsetzung von wasserlöslichen reaktive Halogenatome enthaltenden Polymerisaten aus ethylenisch ungesättigten Alkoxysilanen, Vinylestern von α-Halogenfettsäureestern, einem weiteren funktionalisierten wasserlöslichen Comonomeren aus der Gruppe N-Vinylpyrrolidon, Vinylmethyläther, N-Vinylmorpholin und N-Vinyl-1.3-oxazidinon-2 und gegebenenfalls einem weiteren nichtfunktionalisierten ethylenisch ungesättigten Comonomeren, mit einem Alkalisalz der Acrylsäure oder Methacrylsäure erhalten werden.

Diese bekannten wasserlöslichen Haftvermittler haben jedoch den Nachteil, daß sie hohe Anteile der funktionalisierten wasserlöslichen Comonomeren im Polymerisat enthalten müssen, um die gewünschte Wasserlöslichkeit zu erreichen. So muß der Anteil dieser Comonomeren im Polymerisat > 30 Gew.-% liegen, um die Haftvermittler wasserlöslich zu machen.

Es bestand daher die Aufgabe, wasserlösliche polymere Haftvermittler zur Verfügung zu stellen, die diese wasserlöslichen Comonomeren entweder nicht, oder nur in stark eingeschränkter Menge enthalten, und ein Verfahren zu ihrer Herstellung zur Verfügung zu stellen.

Wasserlösliche, Alkoxysilylgruppen aufweisende, als Haftmittel wirksame Copolymerisate aus wasserunlöslichen, reaktive Halogenatome enthaltende, Copolymerisaten A, die durch Copolymerisation von

a) 2 bis 30 Gew.-% eines Vinylalkoxysilans oder Methacryloxypropylalkoxysilans

b) 2 bis 30 Gew.-% eines Vinylesters einer α-Halogenfettsäure oder eines in der Methylgruppe monohalogenierten Methylstyrols

c) 40 bis 96 Gew.-% eines Fettsäurevinylesters, eines Acrylsäurealkylesters und/oder Methacrylsäurealkylesters

d) 0 bis 56 Gew.-% Styrol

e) 0 bis 30 Gew.-% eines ethylenisch ungesättigten Monomeren der allgemeinen Formel I

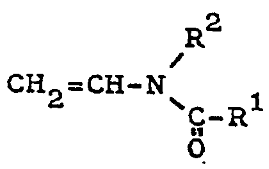

I ,

worin $R^1$ für $C_1$- bis $C_3$-Alkylgruppen und $R^2$ für $C_1$ bis $C_4$-Alkylgruppen steht, oder $R^1$ und $R^2$ gemeinsamer Bestandteil einer Gruppierung $-(-CH_2-)_n$, mit n = 3 bis 5, sein kann und der Ring zwischen zwei C-Atomen durch ein Sauerstoffatom unterbrochen sein kann, erhalten werden, **dadurch gekennzeichnet,** daß sie entweder die Gruppierung

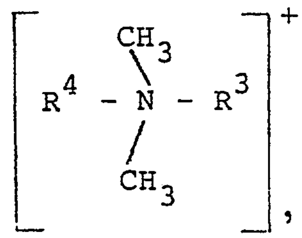

in der $R^3$ für den halogenfreien Rest des Copolymerisats A und $R^4$ für einen Acryloxyethyl- oder Methacryloxyethylrest stehen oder einen 2- oder 4-Vinylpyridiniumrest enthalten, erfüllen diese Aufgabe.

Die erfindungsgemäßen wasserlöslichen Alkoxysilylgruppen aufweisenden Copolymerisate zeigen ausgezeichnete haftvermittelnde Wirkung zwischen anorganische oxydischen Materialien und Polymeren.

Als Basis-Polymer in den neuen Copolymerisaten dient ein halogenhaltiges Copolymer A, das auch bei den polymeren Haftvermittlern gemäß DE-OS 3 227 552 als Basis-Polymer dient.

Dieses halogenhaltige Basis-Copolymerisat enthält einpolymerisiert vorzugsweise 5 bis 25 Gew.–% Vinylalkoxysilan oder Methacryloxypropyltrialkoxysilan, 5 bis 25 Gew.–% eines Vinylesters einer α-Halogenfettsäure, 50 bis 90 Gew.–% eines Fettsäurevinylesters, Acrylsäurealkylesters und/oder Methacrylsäurealkylesters, 0 bis 50 Gew.–% eines Comonomeren der allgemeinen Formel I

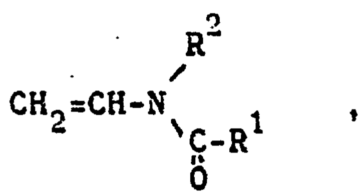

worin $R^1$ für $C_1$– bis $C_3$–Alkylgruppen und $R^2$ für $C_1$ bis $C_4$-Alkylgruppen steht, oder $R^1$ und $R^2$ gemeinsamer Bestandteil einer Grupierung $-(-CH_2-)_n$ bedeutet, worin n = 3 bis 5 sein kann und der Ring zwischen zwei C-Atomen durch ein Sauerstoffatom unterbrochen sein kann.

Die in den Basis-Copolymerisaten einpolymerisiert enthaltenden Vinylsilane sind vorzugsweise Vinyltrialkoxysilane oder Methacryloxypropylalkoxysilane, deren Alkoxygruppen jeweils 1 bis 4 C-Atome aufweisen, z.B. Vinyltrimethoxysilan, Vinyltriethoxysilan, Methacryloxypropyltrimethoxysilan und Methacryloxypropyltriethoxysilan.

Die in den Basis-Copolymerisaten einpolymersiert enthaltenden Vinylester von α-Halogenfettsäuren sind bevorzugt Chloressigsäurevinylester

oder Bromessigsäurevinylester. Im allgemeinen kann die Fettsäurekomponente jedoch auch bis zu 6 C-Atome besitzen.

Bei den zur Herstellung der Basis-Copolymerisate verwendeten Fettsäurevinylester kann die Fettsäure bis zu 18 C-Atomen besitzen. Beispiele geeigneter Fettsäurevinylester sind:

Vinyllaurat oder Vinylstearat; die einsetzbaren Acrylsäureester sind solche aus der Gruppe Methylacrylat, Ethylacrylat, Isopropylacrylat, n-Butylacrylat, Isobutylacrylat oder 2– Ethylhexylacrylat und die verwensbaren Methacrylsäureester umfassen solche aus der Gruppe Methylmethacrylat, Ethylmethacrylat, Propylmethacrylat, Butylmethacrylat und deren Isomere oder 2-Ethylhexylmethacrylat.

Sofern Styrol als Comonomeres mitverwendet wird, ist die Komponente c) vorzugsweise ein Acrylsäurealkylester oder Methacrylsäurealkylester.

Als Beispiele der in den Basis-Copolymerisaten einpolymerisiert enthaltenden Comonomeren der allgemeinen Formel I

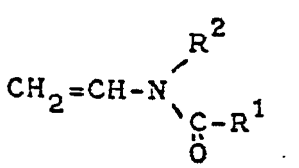 ,

seien N-Vinylpyrrolidon, N-Methylvinylacetamid, N-Vinylmorpholinon-2 oder N-Vinyl-1, 3-oxazidinon-2 genannt.

Die genannten, den Basis-Copolymerisaten zugrunde liegenden ethylenisch ungesättigten Comonomere lassen sich nach bekannten freiradikalischen Verfahren leicht copolymerisieren. Die Polymerisation wird in Gegenwart an sich bekannter Initiatoren durchgeführt, zu denen Verbindungen, wie beispielsweise organische Peroxyde oder Azoisobuttersäuredinitrile zählen. Als Beispiele seien genannt:

Benzoylperoxyd, Diacetylperoxyd, Methyläthylketonperoxyd, Methylsiobutylketonperoxyd, Cyclohexanonperoxyd, Cymolhydroperoxyd, tert.-Butylhydroperoxyd, Di-tert.-butylperoxyd, Dicumylperoxyd, 1,3-Di-tert.-butylperoxyisopropylbenzol, tert.-Butylperacetat, tert.-Butylperoctan, tert.-Butylperpivalat. Der Initiator wird in Mengen von 0,2 bis 3 Gew.-%, bezogen auf das Gewicht der ethylenisch ungesättigten Monomeren zugesetzt, was gewöhnlich genügt, um eine angemessene Reaktionsgeschwindigkeit und einen hohen Monomerumsatz zu erzielen.

Die Polymerisation zu den chlorhaltigen Copolymerisaten kann in Substanz, d.h. ohne die zusätzliche Verwendung eines Verdünnungs- oder Lösungsmittels durchgeführt werden. Vorzugsweise wird sie jedoch als Lösungspolymerisation durchgeführt.

Als Lösungsmittel können dabei solche eingesetzt werden, die nicht in irgendeiner Weise die Polymerisation behindern oder mit der Alkoxysilylgruppe oder dem Halogencarbonsäurerest der Vinylmonomeren in irgendeiner Weise reagieren. Geeignete Lösungsmittel sind Fettsäureester, wie beispielsweise Essigsäureethylester oder Methylgylkolacetat, Ketone, wie beispielsweise Aceton oder Methylethylketon oder aromatische Kohlenwasserstoffe, wie beispielsweise Benzol oder Toluol oder Alkohole, wie beispielsweise Methanol, Ethanol oder Isopropanol. Das Gewichtsverhältnis der einsetzbaren Monomeren zu den Lösungsmitteln kann zwischen 4 : 1 und 1 : 4 schwanken.

Die genannte Copolymerisation wird im allgemeinen so durchgeführt, daß man alle Monomeren zusammen in das Reaktionsgefäß bringt und sie regellos nach ihren relativen Konzentrationen und relativen Reaktionsfähigkeiten reagieren läßt, so daß Polymerisate mit statistisch verteilten Gruppierungen der Monomeren gebildet werden. Zur Vergrößerung oder Verringerung der Uneinheitlichkeit der Polymerisate kann jedoch auch eines oder mehrere der ethylenisch ungesättigten Monomeren im Verlauf der Polymerisation zudosiert werden. Die Art dieser Reaktionen ist auf dem Gebiet der freiradikalischen Polymerisation allgemein bekannt.

Die Herstellung der als Haftvermittler wirksamen erfindungsgemäßen Copolymerisate mit einer funktionellen Ammoniumgruppe der allgemeinen Formel II

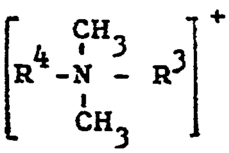 II,

in der der Rest $R^3$ für halogenfreien Rest des halogenhaltigen Basis-Copolymerisats steht, das auch bereits Ammoniumgruppen der allgemeinen Formel II enthalten kann, und $R^4$ eine Acryloxyethyl- oder Methacryloxyethylgruppe bedeutet, erfolgt durch Umsetzung der, reaktive Halogenatome enthaltenden, Basis-Copolymerisate mit Dimethylaminoethylacrylat oder Dimethylaminoethylmethacrylat. Die Aminoverbindungen werden in solchen Mengen verwendet, daß pro Grammatom Halogen der Basis-Copolymerisate 05 bis 1,5 Mol Aminoverbindungen verfügbar sind; vorzugsweise beträgt das Verhältnis 1:1.

Die Herstellung der als Haftvermittler wirksamen erfindungsgemäßen Copolymerisate mit einer 2– oder 4–Vinylpyridiniumgruppe erfolgt durch Umsetzung der reaktive Halogenatome enthaltenden Copolymerisate mit 2– oder 4–Vinylpyridin. Die Vinylpyridine werden in solchen Mengen eingesetzt, daß pro Grammatom reaktives Halogen der Basis-Copolymerisate 0,5 bis 1,5 Mole der Pyridinverbindungen verfügbar sind, vorzugsweise beträgt das Verhältnis 1:1.

Eine bevorzugte Ausführungsform der Umsetzung mit den Aminoethyl (meth) acrylaten oder Vinylpyridinen, die gemeinsam allgemein hier auch als tertiäre Amine bezeichnet werden, besteht in der Verwendung von Lösungen der Ausgangs-Copolymerisate, wie sie z.B. bei der Lösungspolymerisation zur Herstellung der Copolymerisate mit den den Halogencarbonsäurerest enthaltenden Grundbausteinen anfallen. Das dabei verwendete Lösungsmittel kann jedoch auch nach der Polymerisation durch ein für die Umsetzung geeignetes Lösungsmittel teilweise oder vollständig substituiert werden.

Die Umsetzung mit den chlorhaltigen Basispolymeren läuft im allgemeinen oberhalb 30°C ab. Aus den weiter unten genannten Gründen ist es jedoch empfehlenswert, im Temperaturbereich zwischen 50 und 120 °C zu arbeiten.

Bei der Herstellung der erfindungsgemäßen Haftvermittler ist es von Vorteil, die in den Ausgangspolymeren enthaltenden restlichen Initiatoren unwirksam zu machen. Dies erfolgt gemäß einer bevorzugten Durchführungsform in der Weise, daß diese Polymerisatlösungen vor dem Umsatz mit den tertiären Aminen bis zur restlosen Zerstörung der Initiatoren auf Temperaturen oberhalb von deren Zerfalltemperatur erhitzt werden.

Auch durch Zugabe von solchen Stabilisatoren, die als Polymerisationsinhibitoren wirken, wie z.B. Di-tert.-bu-tylkresol, Hydrochinonmonomethyläther, Phenol, Pyrogallol, Hydrochinon oder Phenothiazin, können die Initiatoren unwirksam gemacht werden. Weitere geeignete Stabilisatoren sind dem Fachmann bekannt. Bei Verwendung einer Menge von etwa 0,01 bis 3 Gew.-%, bezogen auf das Polymerisat, verhindern diese Stabilisatoren die intermolekulare Vernetzung des polymeren Haftvermittlers während der Herstellung, Verarbeitung und Lagerung.

Die durch diese Umsetzung erhaltenen Copolymeren wirken als Haftvermittler zwischen Polymeren und Füllstoffen, Pigmenten oder Farbstoffen. Bei den Polymeren handelt es sich um beliebige, durch freiradikalische Reaktionen zu dreidimensionalen Netzwerken modifzierbare Polymerisate. Beispiele solcher Polymerisate sind Polyethylen, Polypropylen, Ethylen-Propylen-Copolymerisate, Ethylen-Propylen-Dicyclopentadien-Terpolymerisate, Polybutadien, Naturkautschuk, Polyamide, Polyvinylalkylether, Styrolcopolymerisate, wie Styrol-Butadien-Kautschuk, Vinylchlorid-Copolymerisate, wie Vinylchlorid-Vinylacetat-Copolymerisate, Ethylen-Vinylacetat-Copolymerisate, Polyacrylate, Polyester oder ungesättigte Polyester oder Gemische aus diesen Polymerisaten.

Besonders gute haftvermittelnde Wirkung zeigen die neuen Copolymerisate bei ungesättigten Polyestermassen, besonders wenn diese unter Mitverwendung von copolymerisationsfähigen Lösungsmitteln eingesetzt werden. Die Säurekomponente der Polyester kann dabei bestehen aus ungesättigten Dicarbonsäuren, wie Fumarsäure, Maleinsäure, Maleinsäureanhydrid, Itakonsäure und zusätzlichen gesättigten Dicarbonsäuren, wie Phthalsäure, Isophthalsäure, Adipinsäure usw.. Die Alkoholkomponente umfaßt u.a. bifunktionelle Alkohole, wie Ethylenglykol, 1,2-Propylenglykol, 1,3-Butylenglykol, Neopentylglykol usw.. Geeignete copolymerisationsfähige Lösungsmittel sind beispielsweise Styrol, Diallylphthalat, Acrylsäure-tert.-butylester. Die polymerisationsfähigen Lösungsmittel können bis zu 60% der Polyesterlösung ausmachen.

Die Füllstoffe, Pigmente oder Farbstoffe, mit denen die Polymerisate unter Mitverwendung der erfindungsgemäßen Haftvermittler verbunden werden können, umfassen anorganisch-oxidische Materialien, wie siliziumdioxydhaltige Stoffe, Metalle und Metallegierungen und Metalloxide. Beispiele für siliziumdioxidhaltige Stoffe sind Glas, Quarz, Keramik, Sand, Ziegel, Asbest und Ton. Als Metalle in solchen Verbunden eignen sich hauptsächlich Aluminium, Zink, Zinn, Magnesium, Silber, Nickel sowie Metallegierungen wie Stahl, Chromnickel, Bronze oder auch solche Metalle, die einer Oberflächenbehandlung mit beispielsweise Phosphaten unterzogen sind. Zu den Metalloxiden zählen beispielsweise Aluminiumoxid, Zinkoxid, Titanoxid, Eisenoxid, Chromoxid.

Die Herstellung des Verbundes aus einem Polymeren und den genannten anorganisch oxidischen Materialien mit Hilfe eines erfindungsgemäßen Haftvermittlers erfolgt auf an sich bekannte Weise, wie sie zum Beispiel in der DE-PS 12 70 716 beschrieben ist, wobei vorzugsweise der Haftvermittler aus wäßriger oder Wasser enthaltender Lösung vor der Herstellung des Verbundes auf die Oberfläche des anorganisch oxidischen Materials aufgebracht wird.

Beispiel 1

In einem 1 l Glasautoklaven wurden 60 g Vinylacetat (dest.), 25 g N-Vinylpyrrolidon (dest.), 10 g Vinyltriethoxysilan (dest.), 5 g Vinylchloracetat (dest.), 61,3 g Ethanol und 0,2 g Azo-isobuttersäuredinitril unter Rühren (100 UpM) und Stickstoffatmosphäre auf 100°C aufgeheizt. Im Verlauf von 7 Stunden wurden nach Ablauf von jeweils weiteren 90 Minuten jeweils 10 ml einer Lösung von 1 g des Initiators, gelöst in 38,7 g Ethanol (= 50 ml Lösung) über eine Dosierpumpe zudosiert. Nach 8 Stunden wurde die Polymerisation beendet. Aus der Feststoffbestimmung der erhaltenen Polymerisatlösung ergab sich ein Umsatz von 91,1%. Das mittlere Molekulargewicht (Mw) des erhaltenen Polymeren wurde zu 13200 ermittelt.

Die im Autoklaven nach der Probennahme verbliebenen 192,3 g wurden mit 6,8 ml ≙ 6,3 g 98,5%-igem Dimethylaminoethylmethacrylat und 0,19 g p-tert.-Butylbrenzkatechin versetzt und unter $N_2$ auf 95 bis 98°C aufgeheizt und 3 Stunden bei dieser Temperatur belassen. 192,4 g einer klaren Lösung wurden erhalten.

Zur Bestimmung des Chlorgehalts wurden 2,6 g dieser Lösung in einen 50 ml Meßkolben genau eingewogen und nach Zugabe von Methanol und 2 g Ammoniumnitrat gewartet, bis eine klare Lösung entstand. Nach Zugabe von 10 ml 0,1 N Silbernitrat-Lösung wurde bis zur Meßmarke aufgefüllt und 24 Stunden im Dunkeln stehen gelassen. Die Titration des Filtrates nach VOLHARD ergab 73,1% Chlorid d.Th., was der Quaternierungsausbeute entspricht.

An einer im Gießverfahren hergestellten Folie wurde durch IR-Messung die Methacrylat-Doppelbindung bei ca. 1640 $cm^{-1}$ bestimmt.

Aus der Polymerisatlösung wurde durch Verdünnen mit Wasser und durch Zugabe von Essigsäure eine 1%ige Grundierlösung vom pH = 5 hergestellt.

5 Objektträger mit fettfreier Oberfläche wurden im Neigungswinkel von ca. 80° aufgestellt und mit

der 1%igen Grundierlösung benetzt. Nach 10minütiger Trocknung des Auftrages wurden die grundierten Platten im Trockenschrank bei 110°C eine Stunde nachbehandelt und auf der mit dem Grundiermittel versehenen Fläche mit einer 1 mm starken Schicht eines styrolhaltigen, kochfesten UP-Harzes (Palatal® A 410, Handelsprodukt der BASF), das auf 100 g Harz 2 g Kobaltoctoat und 1 g Acetylacetonperoxyd enthielt, versehen.

Nach einer Stunde Lagerung bei 23°C unter einer $CO_2$-Atmosphäre wurden die beschichteten Objektträger 2 Stunden bei 100°C nachbehandelt.

Als Vergleichsproben wurden ungrundierte Objektträger in gleicher Weise mit einer UP-Harzschicht versehen.

Der Verbund zwischen Harzschicht und Glas wurde durch Eintauchen in siedendes Wasser überprüft. Bei den nichtgrundierten Objektträgern löste sich die UP-Harzschicht nach wenigen Minuten, bei den grundierten war sie auch nach einer Stunde Kochdauer noch immer gut.

Beispiel 2

Beispiel 1 wurde mit der Abänderung wiederholt, daß an Stelle von Ethanol als Lösungsmittel 61,2 g Methylglykolacetat verwendet wurde. Die Polymerisationsausbeute betrug 98,3%, die Quaternierungsausbeute ergab 78,3%.

Die Ausprüfung als Grundiermittel gemäß Beispiel 1 ergab eine Kochfestigkeit des Verbundes zwischen Harzschicht und Glas von > einer Stunde.

Beispiel 3

In einem 1 l Glasautoklaven wurden 75 g Vinylacetat (dest.), 10 g Vinyltriethoxysilan (dest.), 15 g Vinylchloracetat (dest.), 60 g Ethanol und 0,2 g Azoisobuttersäuredinitril unter mäßigem Rühren und Stickstoffatmosphäre auf 100°C aufgeheizt. Im Verlauf von 7 Stunden wurden nach Ablauf von jeweils weiteren 90 Minuten jeweils 10 ml einer Lösung von 1 g des Initiators, gelöst in 38,7 g Ethanol ( = 50 ml Lösung) über eine Dosierpumpe zudosiert. Nach 8 Stunden wurde die Polymerisation beendet. Die Feststoffbestimmung der erhaltenen Polymerisatlösung ergab einen Umsatz von 98,0%. Der Autoklaveninhalt wurde mit 20,4 ml ≙ 18,9 g 98,5%igem Dimethylaminoethylmethacrylat und 0,21 g Hydrochinonmonomethylether versetzt und unter $N_2$ 3 Stunden bei 95 bis 98°C gehalten. 205,0 g einer klaren Lösung wurden erhalten.

Die Chloridbestimmung entsprechend Beispiel 1 ergab eine Quaternierungsausbeute von 80,1%. Die Ausprüfung als wasserlösliches Grundiermittel gemäß Beispiel 1 ergab eine Kochfestigkeit des Verbundes zwischen Harzschicht und Glas von > 1 Stunde.

Beispiel 4

In einem Glasautoklaven wurden 50 g Ethylacrylat (dest.), 10 g Methacryloxypropyltrimethoxysilan, 20 g Methylmethacrylat (dest.) und 20 g Chlormethylstyrol mit 61,5 g Methanol gemischt, 0,4 g Azoisobuttersäuredinitril hinzugefügt und unter Rühren in Stickstoffatmosphäre auf 65°C aufgeheizt.

Im Verlauf von 7 Stunden wurden nach Ablauf von jeweils weiteren 90 Minuten jeweils 10 ml einer Lösung von 1 g des Initiators, gelöst in 38,7 g Ethanol ( = 50 ml Lösung) über eine Dosierpumpe zudosiert. Nach insgesamt 8 Stunden Reaktionsdauer bei 65°C wurde der Autoklaveninhalt für 1 Stunde auf 100°C erhitzt. Die Feststoffbestimmung der daraufhin erhaltenen Polymerisatlösung an einer entnommenen Probe ergab einen Umsatz von 96,2%.

Nach Abkühlung auf 40°C wurden dem Autoklaveninhalt 20,6 g eines 98,5%igen Dimethylaminoethylmethacrylates und 0,30 g p-tert.-Butylbrenzkatechin zugesetzt und die Mischung unter $N_2$ 2,5 Stunden auf 98°C erhitzt. 206,4 g einer klaren Lösung wurden erhalten.

Die Chloridbestimmung gemäß Beispiel 1 ergab eine Quaternierungsausbeute von 78,8%.

Die Ausprüfung als mit Wasser mischbares Grundier- und Haftmittel gemäß Beispiel 1 ergab eine Kochfestigkeit des Verbundes zwischen Harzschicht und Glas von > 1 Stunde.

Beispiel 5

In einem Glasautoklaven wurden 60 g Ethylacrylat (dest.), 8 g Methacryloxypropyltriethoxysilan, 12 g Styrol (dest.) und 20 g Chlormethylstyrol mit 61,5 g Ethanol gemischt, 0,4 g Azoisobuttersäuredinitril hinzugefügt und unter Rühren (110 UpM) und einer Stickstoffatmosphäre auf 75°C aufgeheizt. Im Verlauf von 7 Stunden wurden nach Ablauf von jeweils weiteren 90 Minuten jeweils 10 ml einer Lösung von 1 g des Initiators, gelöst in 38,7 g Ethanol (= 50 ml Lösung) über eine Dosierpumpe zudosiert. Nach insgesamt 8 Stunden Reaktionsdauer bei 75°C wurde der Autoklaveninhalt für 45 Minuten auf eine Temperatur von 103°C gebracht. Die Feststoffbestimmung der daraufhin erhaltenen Polymerisatlösung an einer entnommenen Probe ergab einen Umsatz vom 97,3%.

Nach Abkühlung auf 45°C wurden dem Autoklaveninhalt 13,8 g 4-Vinylpyridin (97%ig) und 0,20 g p-tert.-Butylbrenzkatechin zugesetzt und die Mischung unter $N_2$ 3 Stunden auf 95°C gehalten. 199,6 g einer klaren Lösung wurden erhalten.

Die Chlorbestimmung gemäß Beispiel 1 ergab eine Quaternierungsausbeute von 82,3%. Die Ausprüfung als mit Wasser mischbares Grundier- und Haftmittel gemäß Beispiel 1 ergab eine Kochfestigkeit des Verbundes zwischen Harzschicht und Glas von > 1 Stunde.

## Patentansprüche

1. Wasserlösliche, Alkoxysilylgruppen aufweisende, als Haftmittel wirksame Copolymerisate aus wasserunlöslichen, reaktive Halogenatome enthaltende, Copolymerisaten A, die durch Copolymerisation von

a) 2 bis 30 Gew.-% eines Vinylalkoxysilans oder Methacryloxypropylalkoxysilans,

b) 2 bis 30 Gew.-% eines Vinylesters einer α–Ha-

logenfettsäure oder eines in der Methylgruppe monohalogenierten Methylstyrols,

c) 40 bis 96 Gew.-% eines Fettsäurevinylesters, eines Acrylsäurealkylesters und/oder Methacrylsäurealkylesters,

d) 0 bis 56 Gew.-% Stoyrol und

e) 0 bis 30 Gew.-% eines ethylenisch ungesättigten Monomeren der allgemeinen Formel I

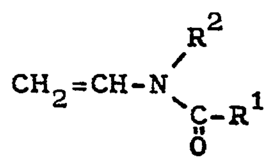

I,

worin $R^1$ für $C_1$– bis $C_3$–Alkylgruppen und $R^2$ für $C_1$– bis $C_4$–Alkylgruppen steht, oder $R^1$ und $R^2$ gemeinsamer Bestandteil einer Gruppierung $-(CH_2-)_n-$, mit n = 3 bis 5, sein kann und der Ring zwischen zwei C–Atomen durch ein Sauerstoffatom unterbrochen sein kann, erhalten werden, dadurch gekennzeichnet, daß sie entweder die Gruppierung

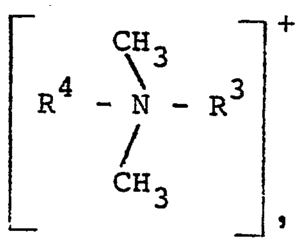

in der R3 für den halogenfreien Rest des Copolymerisats A und R4 für einen Acryloxyethl– oder Methacryloxyethylrest stehen, oder einen 2– oder 4–Vinylpyridiniumrest enthalten.

2. Verfahren zur Herstellung wasserlöslicher, Alkoxysilylgruppen aufweisender Polymerisate gemäß Anspruch 1, dadurch gekennzeichnet, daß wasserunlösliche, reaktive Halogenatome enthaltende Polymeristate aus

a) 2 bis 30 Gew.-% eines Vinylalkoxysilans oder Methacryloxypropylalkoxysilans,

b) 2 bis 30 Gew.-% eines Vinylesters einer α-Halogenfettsäure oder eines in der Methylgruppe monohalogenierten Methylstyrols,

c) 40 bis 96 Gew.-% eines Fettsäurevinylesters, eines Acrylsäurealkylesters und/oder Methacrylsäurealkylesters,

d) 0 bis 56 Gew.-% Styrol und

e) 0 bis 30 Gew.-% eines ethylenisch ungesättigten Monomeren der allgemeinen Formel I

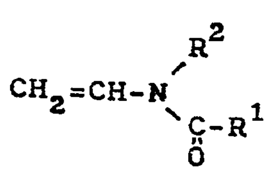

I,

worin $R^1$ für $C_1$– bis $C_3$–Alkylgruppen und $R^2$ für $C_1$– bis $C_4$–Alkylgruppen steht, oder $R^1$ und $R^2$ gemeinsamer Bestandteil einer Gruppierung $-(CH_2-)_n-$, mit n = 3 bis 5, sein kann und der Ring zwischen zwei C–Atomen durch ein Sauerstoffatom unterbrochen sein kann, in an sich bekannter Weise mit Dimethylaminoethylacrylat oder Dimethylaminoethylmethacrylat oder 2– oder 4–Vinylpyridin umgesetzt werden, wobei man pro Grammatom Halogen der wasserunlöslichen Polymerisate 0,5 bis 1,5 Mol der Aminoverbindungen bzw. Pyridinverbindungen einsetzt.

3. Verfahren gemäß Anspruch 2, dadurch gekennzeichnet, daß die Umsetzung bei Temperaturen zwischen 50 und 120°C durchgeführt wird.

4. Verfahren gemäß Anspruch 2, dadurch gekennzeichnet, daß vor dem Zusatz der tertiären Aminoverbindungen Polymerisationsinhibitoren dem Reaktionsgemisch zugesetzt werden.

5. Verwendung der wasserlöslichen Polymeren gemäß Anspruch 1 als Haftvermittler zwischen anorganisch-oxydischen Materialien und Polymeren.

**Claims**

1. Water soluble, alkoxysilyl group-containing copolymerisate effective as adhesive, formed from water insoluble reactive halogen atom-containing copolymerisates A, which are obtained by copolymerisation of

a) 2 to 30% by weight of a vinylalkoxysilane or methacryloxypropylalkoxysilane,

b) 2 to 30% by weight of a vinyl ester of an α-halo fatty-acid or a methylstyrene monohalogenated in the methyl group,

c) 40 to 96% by weight of a fatty acid vinyl ester, an acrylic acid alkyl ester and/or methacrylic acid alkl ester,

d) 0 to 56% by weight styrene and

e) 0 to 30% by weight of an ethylenically unsaturated monomer of the general formula I

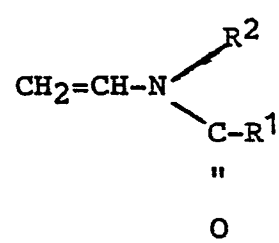

wherein $R^1$ stands for $C_1$ to $C_3$ alkyl groups and $R^2$ stands for $C_1$ to $C_4$ alkyl groups, or $R^1$ and $R^2$ can be combined constituent of a grouping $-(CH_2)_n-$, with n = 3 to 5, and the ring between two C–atoms can be interrupted by an oxygen atom, characterised in that they contain either the grouping

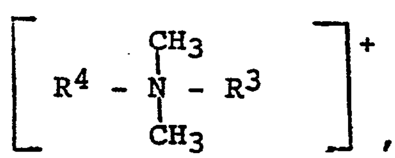

in which $R^3$ stands for the halogen free residue of the copolymerisate A and $R^4$ stands for an acryloxyethyl residue or methacryloxyethyl residue, or contain a 2– or 4–vinylpyridinium residue.

2. Process for the production of water-soluble alkoxysilyl group-containing polymerisates according to claim 1, characterised in that water insoluble, reactive halogen atom-containing polymerisates of

a) 2 to 30% by weight of a vinylalkoxysilane or methacryloxypropylalkoxysilane,

b) 2 to 30% by weight of a vinyl ester of an α-halo fatty-acid or a methylstyrene monohalogenated in the methyl group,

c) 40 to 96% by weight of a fatty acid vinyl ester, an acrylic acid alkyl ester and/or methacrylic acid alkyl ester,

d) 0 to 56% by weight styrene and

e) 0 to 30% by weight of an ethylenically unsaturated monomer of the general formula I

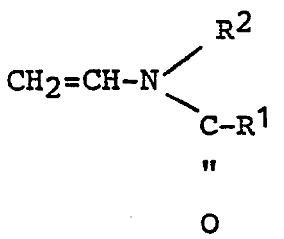

wherein $R^1$ stands for $C_1$ to $C_3$ alkyl groups and $R^2$ stands for $C_1$ to $C_4$ alkyl groups, or $R^1$ and $R^2$ can be combined consitituent of a grouping $-(CH_2)_n-$, with n = 3 to 5, and the ring between two C–atoms can be interrupted by an oxygen atom, are reacted in known manner with dimethylaminoethyl acrylate or dimethylaminoethyl methacrylate or 2– or 4–vinylpyridine, with 0.5 to 1.5 mol of the amino compounds or pyridine compounds being employed per gram atom of halogen of the water insoluble polymerisate.

3. Process according to claim 2, characterised in that the reaction is carried out at temperatures between 50 and 120°C.

4. Process according to claim 2, characterised in that, before the addition of the tertiary amino compounds, polymerisation inhibitors are added to the reaction mixture.

5. Use of the water soluble polymers according to claim 1 as adhesive agents between inorganic oxidic materials and polymers.

## Revendications

1. Copolymères hydrosolubles comportant des groupes alcoxysilyles, efficaces comme adhésifs, à partir de copolymères A insolubles dans l'eau contenant des atomes d'halogène réactifs, qui sont obtenus par copolymérisation

a) de 2 à 30% en poids d'un vinylalcoxysilane ou d'un méthacryloxypropylalcoxysilane,

b) de 2 à 30% en poids d'un ester vinylique d'un acide gras α–halogéné ou d'un méthylstyrène monohalogéné dans le groupe méthyle,

c) de 40 à 96% en poids d'un ester vinylique d'acide de gras, d'un acrylate d'alkyle et/ou d'un méthacrylate d'alkyle,

d) de 0 à 56% en poids de styrène et

e) de 0 à 30% en poids d'un monomère éthyléniquement insaturé de formule générale I

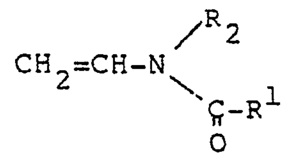

I

dans laquelle $R^1$ représente des groupes alkyles en $C_1$ à $C_3$ et $R^2$ représente des groupes alkyles en $C_1$ à $C_4$ ou $R^1$ et $R^2$ peuvent être un constituant commun d'un groupement $-(CH_2)_n-$ avec n = 3 à 5 et le cycle peut être interrompu mes de C par un atome d'oxygène, caractérisé en ce qu'ils contiennent soit le groupement

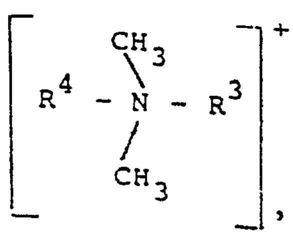

dans lequel $R^3$ représente le reste dépourvu d'halogène du copolymère A et $R^4$ représente un radical acryloxyéthyle ou méthacryloxyéthyle, soit un radical 2– ou 4–vinylpyridinium.

2. Procédé de préparation de polymères hydrosolubles comportant des groupes alcoxysilyles selon la revendication 1, caractérisé en ce que l'on fait réagir de façon connue en soi des polymères insolubles dans l'eau contenant des atomes d'halogène réactifs obtenus à partir

a) de 2 à 30% en poids d'un vinylalcoxysilane ou d'un méthacryloxypropylalcoxysilane,

b) de 2 à 30% en poids d'un ester vinylique d'un acide gras α–halogéné ou d'un méthylstyrène monohalogéné dans le groupe méthyle,

c) de 40 à 96% en poids d'un ester vinylique d'acide de gras, d'un acrylate d'alkyle et/ou d'un méthacrylate d'alkyle,

d) de 0 à 56% en poids de styrène et

e) de 0 à 30% en poids d'un monomère éthyléniquement insaturé de formule générale I

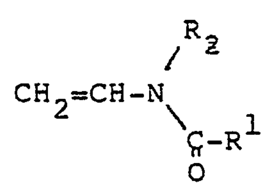

I

dans laquelle $R^1$ représente des groupes alkyles en $C_1$ à $C_3$ et $R^2$ représente des groupes alkyles en $C_1$

à $C_4$ ou $R^1$ et $R^2$ peuvent être un constituant commun d'un groupement $-(CH_2)_n-$ avec n = 3 à 5 et le cycle peut être interrompu entre deux atomes de C par un atome d'oxygène, avec de l'acrylate de diméthylaminoéthyle ou du méthacrylate de diméthylaminoéthyle ou avec de la 2– ou 4–vinylpyridine, moyennant quoi on met en œuvre par atome-gramme d'halogène des polymères insolubles dans l'eau 0,5 à 1,5 mole des composés amino, respectivement des composés pyridiniques.

3. Procédé selon la revendication 2, caratérisé en ce que la réaction est conduite à des températures entre 50 et 120°C.

4. Procédé selon la revendication 2, caractérisé en ce que des inhibiteurs de polymérisation sont ajoutés au mélange réactionnel avant l'addition des composés amino tertiaires.

5. Emploi des polymères hydrosolubles selon la revendication 1 comme agents adhésifs entre des matériaux inorganiques à base d'oxydes et des polymères.